# EUROPÄISCHE PATENTSCHRIFT

(11) **EP 1 112 430 B1**
(45) Veröffentlichungstag und Bekanntmachung des Hinweises auf die Patenterteilung: **17.11.2004**
(21) Anmeldenummer: 99955665.7
(22) Anmeldetag: 04.09.1999
(51) Int. Cl.: E05B 49/00

(54) **EIN SCHLÜSSELKONTROLLVERFAHREN**
METHOD FOR CONTROLLING A CODE
PROCEDE DE COMMANDE DE CLE

(30) Priorität: 09.09.1998 AU PP576398; 05.08.1999 AU 4341499
(43) Veröffentlichungstag der Anmeldung: 04.07.2001
(73) Patentinhaber: ROBERT BOSCH GMBH, 70442 Stuttgart (DE)
(72) Erfinder: STROHBECK, Walter, Narre Warren 3805 (AU)
(86) Internationale Anmeldenummer: PCT/DE1999/002811
(87) Internationale Veröffentlichungsnummer: WO 2000/014369

(56) Entgegenhaltungen:
- EP-A- 0 695 675
- EP-A- 0 704 352
- DE-A- 4 317 114
- US-A- 5 508 691
- US-A- 5 513 105
- US-A- 5 708 308
- PATENT ABSTRACTS OF JAPAN vol. 018, no. 498 (M-1675), 19. September 1994 (1994-09-19) & JP 06 167151 A (NIPPONDENSO CO LTD), 14. Juni 1994 (1994-06-14)

## Beschreibung

Die vorliegende Erfindung bezieht sich auf ein Sicherheitssystem für ein Kraftfahrzeug nach der Gattung des Anspruchs 1.

Es sind passive Sicherheitssysteme für Fahrzeuge vorhanden, die fernbetätigte Schlüssel mit Transpondern verwenden, die mit einem Sender/Empfänger eines Fahrzeugs kommunizieren, wenn der Transponder innerhalb eines bestimmten Bereichs des Sender/Empfängers ist. Vorausgesetzt, daß die Kommunikation zwischen einem Schlüssel und dem Sender/Empfänger einem vorherbestimmten Kommunikationsprotokoll folgt, und eindeutige Authentifizierungsdaten ausgetauscht und für gültig erklärt werden, wird der Schlüssel als zulässiger Schlüssel erklärt und das System gewährt Einlaß und/oder Benutzung des Fahrzeugs. Wenn der zulässige Schlüssel sich in der Folge außerhalb des Bereichs des Sender/Empfängers bewegt, sichert das Sicherheitssystem das Fahrzeug durch Verschließen und Immobilisieren des Fahrzeugs.

Aus der EP-A-0 695 675 ist eine Diebstahlschutzeinrichung bekannt, die spezifische ID-Codes einer Vielzahl von Schlüsseln speichert. Zur Bestimmung der Gültigkeit eines Schlüssels wird überprüft, ob ein von einem Transponder gesendeter Code mit einem der registrierten spezifischen ID-Codes übereinstimmt. In einer Sonderbetriebsart kann eine Änderung der registrierten ID-Codes durchgeführt werden. Werden beispielsweise Schlüssel gestohlen und sollen daraufhin die gestohlenen Schlüssel ungültig gemacht werden, so müssen die verbleibenden Schlüssel ihre ID-Nummer der Steuereinrichtung neu mitteilen. Hierzu sind nacheinander die Schlüssel in das Schlüsselloch einzuführen. Duch eine bestimmte Bedienungsfolge des Zündungsschalters gelangt das System in einen Anlemmodus. Hierbei wird der Schlüssel zur Aussendung seines ID-Codes veranlasst, der daraufhin in dem Steuergerät, das die Wegfahrsperrenfunktion realisiert, abgepeichert wird. Gültige ID-Codes, die bei der Anlernprozedur nicht neu eingelesen werden, werden gelöscht.

Die EP-A-0 704 352 zeigt eine Diebstahlschutzeinrichtung mit einem ersten Speichermittel zur Speicherung von ID-Codes für mehrere Anwendungsschlüssel und mit einem zweiten Speichermittel zur Speicherung eines ID-Codes für einen Anlemschlüssel. Werden zunächst ein registrierter Anlernschlüssel und anschließend die Anwendungsschlüssel in ein Schloss eingeführt, so erfolgt die Aktivierung eines Erneuerungsmodus für den ID-Code, indem der ID-Code des zuvor registrierten Anwendungsschlüssels mit dem ID-Code des nachfolgend eingeführten Anwendungsschlüssels in dem ersten Speichermittel überschrieben wird.

Weitere Diebstahlschutzeinrichtungen mit der Möglichkeit zur Registrierung und Speicherung neuer ID-Codes sind in der DE-A-43 17 114, in der US-A-5 508 691 sowie in der US-A-5 513 105 gezeigt.

Wenn ein zulässiger Schlüssel für ein Fahrzeug verloren geht, muß der Schlüssel deaktiviert werden, so daß er nicht mehr dazu benutzt werden kann, Zugang zu dem Fahrzeug zu gewähren. Es ist daher wünschenswert, eine einfache Methode zur Deaktivierung verlorener Schlüssel und zur Reaktivierung wiedergefundener zulässiger Schlüssel zu finden, insbesondere wenn die Schlüssel nicht mit Druckknöpfen ausgerüstet sind.

Die vorliegende Erfindung zeigt ein Sicherheitssystem für ein Kraftfahrzeug mit zumindest einem einen Sender/Empfänger aufweisenden Schlüssel, der in einem Speicher eine Identifizierungsnummer enthält, mit einer elektronischen Kontrolleinheit, die einen Sender/Empfänger zur Kommunikation mit dem Schlüssel enthält, sowie mit einem Speicher, in dem Identifizierungsnummern abgespeichert sind, wobei die elektronische Kontrolleinheit von dem Schlüssel gesendete Authentifizierungsdaten empfängt und Zugang oder Inbetriebnahme des Kraftfahrzeugs gewährt, wenn die in den Authentifizierungsdaten enthaltene Identifizierungsnummer in dem Speicher (12) der Kontrolleinheit gespeichert ist. In dem Speicher der Kontrolleinheit ist für jede gespeicherte Identifizierungsnummer eine Freigabeinformation gespeichert, wobei die elektronische Kontrolleinheit in einem durch ein Aktivierungsverfahren ausgelösten Schlüsselvalidierungsmodus die in Reichweite des Senders/Empfängers der Kontrolleinheit befindlichen Schlüssel zum Senden der Identifizierungsnummer des Schlüssels veranlasst, die zugehörigen Freigabeinformationen jeder empfangenen und im Speicher der Kontrolleinheit gespeicherten Identifizierungsnummer setzt und die Freigabeinformationen für sämtliche anderen in dem Speicher der Kontrolleinheit gespeicherten Identifizierungsnummern zurücksetzt, wobei die elektronische Kontrolleinheit Zugang oder Inbetriebnahme des Kraftfahrzeugs nur bei gesetzter Freigabeinformation gewährt.

Eine bevorzugte Realisierung der vorliegenden Erfindung ist anschließend mit Bezug auf die beiliegende Zeichnung als Beispiel beschrieben, wobei:

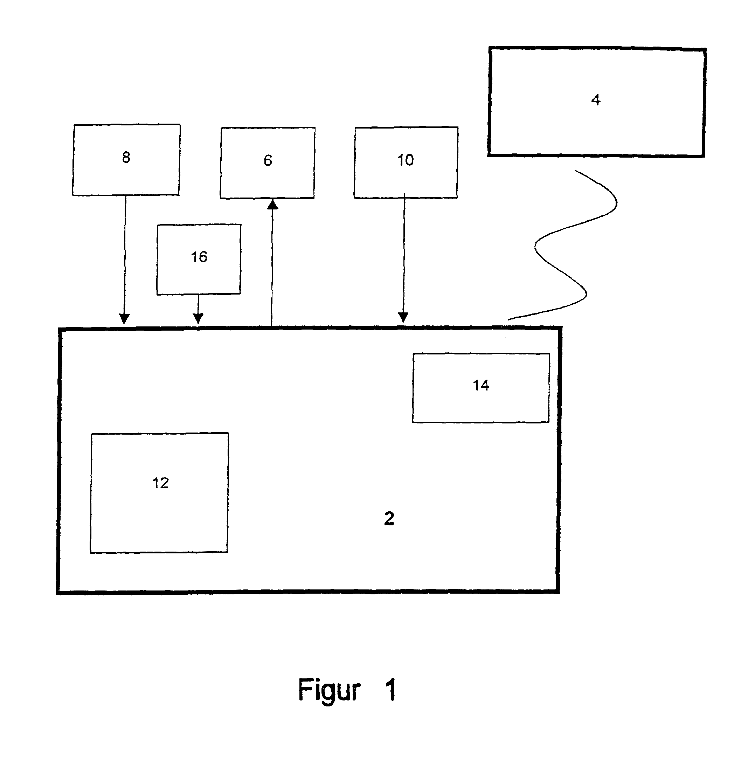

Figur 1 ein Blockdiagramm einer bevorzugten Realisierung eines Sicherheitssystems ist;

Ein Sicherheitssystem, wie in Figur 1 gezeigt, schließt folgendes ein:
eine elektronische Kontrolleinheit (ECU) 2, welche in ein Fahrzeug eingebaut ist und eine Verarbeitungsschaltung zur Kommunikation mit anderen elektrischen und elektronischen Teilen des Fahrzeugs und des Sicherheitssystems aufweist. Insbesondere beinhaltet die ECU 2 einen RF-Sender/Empfänger 14 zur Erzeugung eines RF-Signals, welches den Transponder eines fernbetätigten Schlüssels 4 des Sicherheitssystems erregt, wenn der Schlüssel 4 sich in der Nähe eines Fahrzeugs befindet.
   Der Schlüssel 4 kann eine Karte oder einen Schlüsselanhänger (Fob) enthalten. Wenn er einmal erregt ist, benutzt der Schlüssel 4 RF-Übertragungsverfahren, um mit dem Sender/Empfänger gemäß einem sicheren Kommunikationsprotokoll zu kommunizieren, um Authentifizierungsdaten von dem Schlüssel 4 zu der ECU 2 weiterzuleiten. Wenn diese empfangen worden sind, vergleicht die ECU 2 die Authentifizierungsdaten mit Sicherheitsdaten in ihrem Speicher, nämlich Sicherheitscodes und Freigabemarken, die in einem EEPROM 12 (elektrisch löschbarer programmierbarer Festwertspeicher) gespeichert sind. Wenn die ECU 2 eine Übereinstimmung zwischen den empfangenen Authentifizierungsdaten und ihren eigenen Sicherheitsdaten findet, gibt die ECU 2 Signale an die anderen Teile des Fahrzeugs ab, Zugang zu dem Fahrzeug oder Inbetriebnahme des Fahrzeugs für den Besitzer des Schlüssels 4 zu ermöglichen. Wenn der Schlüssel 4 aus der unmittelbaren Nähe des Fahrzeugs entfernt wird, wird dies von dem Sender/Empfänger 14 erkannt, welcher dann die ECU 2 veranlaßt, Signale zu erzeugen, um das Fahrzeug zu sichern, zum Beispiel durch Verschließen und Immobilisieren des Fahrzeugs.

Normalerweise kann bei Sicherheitssystemen eine Anzahl zulässiger Schlüssel benutzt werden, um Zugang zu dem Fahrzeug zu erlangen. Die Schlüssel 4 schließen jeweils eine eindeutige Serien- oder Identifizierungsnummer ein, und diese wird der ECU 2 als Bestandteil der Authentifizierungsdaten kommuniziert. Die ECU 2 speichert die Seriennummern für jeden zulässigen Schlüssel in ihrem EEPROM 12, und für jede Seriennummer ist eine Freigabemarke (enable flag) gespeichert. Als Alternative zu der Freigabemarke kann das System ein Kontrollbyte speichern, bei welchem es sich um eine verschlüsselte Version der Identifizierungsnummer handeln kann. Während des Authentifizierungsverfahrens, wenn die ECU 2 die Authentifizierungsdaten überprüft, prüft der ECU 2 um zu ermitteln ob die empfangene Seriennummer des kommunizierenden Schlüssels 4 in dem EEPROM 12 gespeichert ist und ob die Freigabemarke eingestellt oder zurückgestellt ist. Falls die Seriennummer gefunden wird und die Freigabemarke eingestellt ist, dann ist der kommunizierende Schlüssel ein zulässiger Schlüssel, welcher dazu benutzt werden kann, Zugang zu dem Fahrzeug zu erlangen. Falls jedoch die Seriennummer gefunden wird und die Freigabemarke nicht eingestellt ist, dann ist der kommunizierende Schlüssel nicht mehr ein zulässiger Schlüssel, der benutzt werden kann. Die ECU 2 ist in der Lage, eine Deaktivierung des Schlüssels und ein Aktivierungsverfahren durchzuführen, welche die Freigabemarke für Schlüssel 4 zurückstellt und einstellt. Dies ermöglicht einem Fahrzeugbesitzer mit verlorenen oder gestohlenen Schlüsseln auf eine einfache Art und Weise, so wie vorstehend beschrieben, zu verfahren.

Wenn ein zulässiger Schlüssel verloren oder gestohlen wurde, kann der Besitzer von mindestens einem verbleibenden zulässigen Schlüssel die ECU 2 in einen Schlüsselvalidierungsmodus versetzen, um alle die restlichen Schlüssel zu validieren. Der Besitzer der restlichen Schlüssel steigt einfach in das Fahrzeug ein, und bringt alle die restlichen Schlüssel in den Bereich des Senders/Empfängers 14, und führt ein vorherbestimmtes Verfahren durch, die ECU 2 in den Schlüsselvalidierungsmodus zu verbringen. Wenn die ECU 2 im Schlüsselvalidierungsmodus ist, schaltet die ECU 2 alle die in ihrem Bereich befindlichen Schlüssel 4 ein, um ihre Seriennummer zu empfangen, und stellt die Freigabemarken in dem EEPROM 12 für die empfangenen Seriennummern ein, während die Freigabemarken für sämtliche anderen in dem EEPROM 12 gespeicherten Schlüsselseriennummern zurückgestellt werden. Die Schlüssel, die sich daher innerhalb des Bereichs des Sender/Empfängers 14 befinden, werden dann zulässige Schlüssel darstellen, und der verlorene oder gestohlene Schlüssel wird nicht mehr länger ein zulässiger Schlüssel sein, da seine Freigabemarke zurückgestellt ist. Vollendung des Schlüsselvalidierungsverfahrens wird von der ECU 2 angezeigt, die ein Abschlußsignal für eine Nachrichteneinheit 6 erzeugt. Die Nachrichteneinheit zeigt einfach entweder sichtbar oder hörbar an, daß das Schlüsselvalidierungsverfahren abgeschlossen ist. Die Nachrichteneinheit 6 kann eine Leuchtdiode in dem Fahrzeug oder aber die Hupe oder Sirene des Fahrzeugs sein. Die Nachrichteneinheit 6 kann auch eine Anzeigeeinheit in dem Fahrzeug sein, welche die Daten empfängt und in der Lage ist, anzuzeigen, welche Schlüssel für das Fahrzeug zulässig sind. Die Anzeigeeinheit würde auch andere Nachrichten anzeigen, wie z.B. "Schlüsselvalidierung abgeschlossen", und kann Kontrollen einschließen, welche einem Benutzr des Fahrzeugs ermöglichen, eine Anzeige abzurufen, welche die zulässigen Schlüssel anzeigt, wie z.B. Schlüssel A, B und C.

Wenn der verlorene oder gestohlene Schlüssel 4 wiedererlangt wird, kann der Schlüssel revalidiert oder neu aktiviert werden, indem wiederum alle die Schlüssel ins Fahrzeug gebracht werden und die ECU2 in den Schlüsselvalidierungsmodus gebracht wird, um das vorstehend aufgeführte Schlüsselvalidierungsverfahren durchzuführen. Die Freigabemarke für den gefundenen Schlüssel 4 wird dann in dem EEPROM 12 eingestellt.

Um die Notwendigkeit zusätzlicher Hardware-Teile in dem Fahrzeug zu vermeiden, muß das benutzte vorherbestimmte Verfahren, um die ECU 2 in den Schlüsselvalidierungsmodus zu versetzen, unter Verwendung schon vorhandener Fahrzeugteile durchgeführt werden. Das vorherbestimmte Verfahren sollte vorteilhafterweise die Verwendung von Teilen und Arbeitsgängen beinhalten, die normalerweise mit dem Starten oder dem Einlaß in das Fahrzeug verbunden sind. Die meisten Fahrzeuge haben eine Startmethode, bei welcher ein Pedal 8 betätigt werden muß, bei welchem es sich um das Brems- oder Kupplungspedal handelt, und dann gleichzeitig der Zündanlaßschalter 10 des Fahrzeugs betätigt werden muß. Die ECU 2 ist mit dem elektrischen Netzwerk oder Kabelbaum des Fahrzeugs verbunden, damit es die erzeugten Signale empfangen kann, wenn das Pedal 8 heruntergedrückt wird und der Zündanlaßschalter 10 betätigt wird. Zu dem vorherbestimmten Verfahren zum Einspringen in den Schlüsselvalidierungsmodus kann dann hinzukommen, daß der Schlüsselbesitzer einfach abwechselnd mehrere Male das Pedal 8 herunterdrückt und den Zündschalter 8 betätigt, sagen wir dreimal, anstatt dies gleichzeitig zu tun. Wenn die ECU 2 die abwechselnde Betätigung des Pedals 8 und des Zündanlaßschalters 10 entdeckt, kann sie dann eine Nachricht für die Nachrichteneinheit 6 erzeugen, um den Einsprung in den Schlüsselvalidierungsmodus zu bestätigen, wenn das vorherbestimmte Verfahren durchgeführt worden ist. Die ECU 2 kann auch Aufrufe an die Nachrichteneinheit 6 erteilen, der Zeitsequenz für die Betätigung des Pedals 8 und des Zündanlaßschalters 8 zu folgen, um dem Schlüsselbesitzer bei der korrekten Durchführung des Verfahrens zur Eingabe des Schlüsselvalidierungsmodus behilflich zu sein. Alternativ können die Schritte und die Fahrzeugteile, die beim Einstieg in das Fahrzeug erforderlich sind, benutzt werden. In einigen passiven Sicherheitssystemen wird zum Beispiel der Schlüssel beim Anheben eines Türgriffes 16 erregt. Das vorherbestimmte Verfahren, das zur Eingabe des Schlüsselvalidierungsmodus erforderlich ist, könnte zum Beispiel beinhalten, daß ein Schlüsselbesitzer den Türgriff 16 mehrere Male innerhalb einer bestimmten Zeitspanne, z.B. viermal in zwei Sekunden, anhebt.

Die ECU 2 kann durch eine Anzahl von ECUs gestellt werden, oder in eine Anzahl von ECUs aufgeteilt werden, und ähnlich kann das Fahrzeug eine Anzahl von Sender/Empfängern und Antennen zur Kommunikation mit fernbetätigten Schlüsseln 4 einschließen,. Die Schlüssel 4 können Schlüssel für passiven Zugang darstellen, die Energie seitens des Fahrzeugs erfordern, um mit der ECU 2 kommunizieren zu können, oder die Schlüssel können ihre eigene Batterieversorgung haben. Während die vorliegende Erfindung besonders vorteilhaft für Schlüssel ist, die keine Betätigungsknöpfe haben, können die Schlüssel 4 aber auch Betätigungsknöpfe aufweisen, und das Sicherheitssystem kann eine Kombination aktiver und passiver Sicherheitssysteme darstellen. Zum Beispiel kann das Sicherheitssystem so ausgelegt sein, daß der Schlüssel 4 bei Aktivierung in der Lage ist, über eine Entfernung, z.B. 30 m, mit dem Fahrzeug zu kommunizieren, und ist auch in der Lage, eingeschaltet oder erregt zu werden, wenn er sich näher am Fahrzeug befindet, wie z.B. durch Anheben des Türgriffes, oder durch irgendeine andere Betätigungseinrichtung, wenn er sich in der Nähe des Fahrzeugs befindet.

Dem Fachkundigen werden hierzu eine Vielzahl von Abwandlungen gegenwärtig werden, ohne daß der Umfang der vorliegenden Erfindung, wie sie hiermit unter Bezug auf die beiliegende Zeichnungen beschrieben wird, überschritten wird.

## Patentansprüche

1. **Sicherheitssystem eines Kraftfahrzeugs**
mit zumindest einem einen Sender/Empfänger aufweisenden Schlüssel (4), der in einem Speicher eine Identifizierungsnummer enthält,
mit einer elektronischen Kontrolleinheit (2), die einen Sender/Empfänger (14) zur Kommunikation mit dem Schlüssel (4) enthält, sowie mit einem Speicher (12), in dem Identifizierungsnummern abgespeichert sind,
wobei die elektronische Kontrolleinheit (2) von dem Schlüssel (4) gesendete Authentifizierungsdaten empfängt und Zugang oder Inbetriebnahme des Kraftfahrzeugs gewährt, wenn die in den Authentifizierungsdaten enthaltene Identifizierungsnummer in dem Speicher (12) der Kontrolleinheit (2) gespeichert ist,
**dadurch gekennzeichnet, dass** in dem Speicher (12) der Kontrolleinheit (2) für jede gespeicherte Identifizierungsnummer eine Freigabeinformation gespeichert ist,
wobei die elektronische Kontrolleinheit (2) in einem durch ein Aktivierungsverfahren ausgelösten Schlüsselvalidierungsmodus die in Reichweite des Senders/Empfängers (14) der Kontrolleinheit (2) befindlichen Schlüssel (4) zum Senden der Identifizierungsnummer des Schlüssels (4) veranlasst, die zugehörigen Freigabeinformationen jeder empfangenen und im Speicher (12) der Kontrolleinheit (2) gespeicherten Identifizierungsnummer setzt und die Freigabeinformationen für sämtliche anderen in dem Speicher (12) der Kontrolleinheit (2) gespeicherten Identifizierungsnummern zurücksetzt,
wobei die elektronische Kontrolleinheit (12) Zugang oder Inbetriebnahme des Kraftfahrzeugs nur bei gesetzter Freigabeinformation gewährt.

2. Sicherheitssystem gemäß Anspruch 1, **dadurch gekennzeichnet, dass** das Aktivierungsverfahren Schritte eines Startverfahrens des Kraftfahrzeugs einschließt.

3. Sicherheitssystem nach einem der vorhergehenden Ansprüche, **dadurch gekennzeichnet, dass** das Aktivierungsverfahren Schritte eines Zugangsverfahrens in das Kraftfahrzeug einschließt.

4. Sicherheitssystem nach einem der vorhergehenden Ansprüche, **dadurch gekennzeichnet, dass** das Aktivierungsverfahren Schritte einer Verwendung von Bedienelementen des Kraftfahrzeugs einschließt.

5. Sicherheitssystem nach Anspruch 4, **dadurch gekennzeichnet, dass** das Bedienelement ein Bremspedal, ein Kupplungspedal, ein Zündanlassschalter oder ein Türgriff ist.

6. Sicherheitssystem nach einem der vorhergehenden Ansprüche, **dadurch gekennzeichnet, dass** die Schritte zu Zeitpunkten relativ zueinander durchgeführt werden, die sich von den Zeitpunkten bei einer standardgemäßen Durchführung der Schritte unterscheiden.

7. Sicherheitssystem nach einem der vorhergehenden Ansprüche, **gekennzeichnet durch** Mittel zur Anzeige des Abschlusses des Schlüsselvalidierungsmodus.

8. Sicherheitssystem nach Anspruch 7, **dadurch gekennzeichnet, dass** die Anzeigemittel die Anzeige der aktuell zulässigen Schlüssel für das System einschließen.

9. Sicherheitssystem nach einem der vorhergehenden Ansprüche, **dadurch gekennzeichnet, dass** jede Freigabeinformation ein Kontrollbyte ist.

10. Sicherheitssystem nach einem der vorhergehenden Ansprüche, **dadurch gekennzeichnet, dass** die Inbetriebnahme das Starten des Kraftfahrzeugs einschließt.

11. Fahrzeug mit einem Sicherheitssystem gemäß einem oder mehreren der vorhergehenden Ansprüche.

## Claims

1. Security system for a motor vehicle, having at least one key (4) which has a transmitter/receiver and contains an identification number in a memory, having an electronic monitoring unit (2) which contains a transmitter/receiver (14) for communicating with the key (4), and having a memory (12) in which identification numbers are stored, the electronic monitoring unit (2) receiving authentication data transmitted by the key (4) and ensuring access or activation of the motor vehicle if the identification number contained in the authentication data is stored in the memory (12) of the monitoring unit (2), **characterized in that** an enabling information item is stored in the memory (12) of the monitoring unit (2) for each stored identification number, the electronic monitoring unit (2) causing, in a key validation mode with is triggered by an activation method, the keys (4) which are within range of the transmitter/receiver (14) of the monitoring unit (2), to transmit the identification number of the key (4), setting the respective enabling information of each received identification number which is stored in the memory (12) of the monitoring unit (2), and resetting the enabling information for all the other identification numbers which are stored in the memory (12) of the monitoring unit (2), and the electronic monitoring unit (12) ensuring access or activation of the motor vehicle only when the enabling information is set.

2. Security system according to Claim 1, **characterized in that** the activation method includes steps of a method for starting the motor vehicle.

3. Security system according to one of the preceding claims, **characterized in that** the activation method includes steps of a method for accessing the motor vehicle.

4. Security system according to one of the preceding claims, **characterized in that** the activation method includes steps for using operator control elements of the motor vehicle.

5. Security system according to Claim 4, **characterized in that** the operator control element is a brake pedal, a clutch pedal, an ignition starter switch or a door handle.

6. Security system according to one of the preceding claims, **characterized in that** the steps are carried out in relation to one another at times which differ from the times when the steps are carried out on a standard basis.

7. Security system according to one of the preceding claims, **characterized by** means for displaying the termination of the key validation mode.

8. Security system according to Claim 7, **characterized in that** the display means include the display of the currently permissible keys for the system.

9. Security system according to one of the preceding claims, **characterized in that** each enabling information item is a checkbyte.

10. Security system according to one of the preceding claims, **characterized in that** the activation includes starting the motor vehicle.

11. Vehicle having a security system according to one or more of the preceding claims.

## Revendications

1. Système de sécurité d'un véhicule automobile, avec au moins une clé (4) présentant un émetteur/récepteur qui contient un numéro d'identification dans une mémoire, avec une unité de contrôle électronique (2) qui contient un émetteur/récepteur (14) pour la communication avec la clé (4) ainsi qu'une mémoire (12) dans laquelle sont enregistrés des numéros d'identification, l'unité de contrôle électronique (2) recevant des données d'authentification envoyées par la clé (4) et autorisant l'accès au véhicule automobile ou la mise en service de celui-ci lorsque le numéro d'identification contenu dans les données d'authentification est enregistré dans la mémoire (12) de l'unité de contrôle (2),
**caractérisé en ce que**
dans la mémoire (12) de l'unité de contrôle (2) une information d'autorisation est enregistrée pour chaque numéro d'identification enregistré, l'unité de contrôle électronique (2), selon un mode de validation de clé déclenché par un procédé d'activation, faisant en sorte que les clés (4) se trouvant à la portée de l'émetteur/récepteur (14) de l'unité de contrôle (2) émettent le numéro d'identification de la clé (4), plaçant les informations d'autorisation associées de chaque numéro d'identification reçu et enregistré dans la mémoire (12) de l'unité de contrôle (2), et replaçant les informations d'autorisation pour tous les autres numéros d'identification enregistrés dans la mémoire (12) de l'unité de contrôle (2), l'unité de contrôle électronique (12) n'autorisant l'accès au véhicule automobile ou la mise en service de celui-ci que lorsque l'information d'autorisation est établie.

2. Système de sécurité selon la revendication 1,
**caractérisé en ce que**
le procédé d'activation comprend des étapes d'un procédé de démarrage du véhicule automobile.

3. Système de sécurité selon l'une quelconque des revendications précédentes,
**caractérisé en ce que**
le procédé d'activation comprend des étapes d'un procédé d'accès au véhicule automobile.

4. Système de sécurité selon l'une quelconque des revendications précédentes,
**caractérisé en ce que**
le procédé d'activation comprend des étapes d'une utilisation d'éléments d'actionnement du véhicule automobile.

5. Système de sécurité selon la revendication 4,
**caractérisé en ce que**
l'élément d'actionnement est une pédale de frein, une pédale d'embrayage, un démarreur ou une poignée de porte.

6. Système de sécurité selon l'une quelconque des revendications précédentes,
**caractérisé en ce que**
les étapes sont réalisées à des moments relatifs les uns par rapport aux autres, qui se distinguent des moments lors d'une réalisation standard des étapes.

7. Système de sécurité selon l'une quelconque des revendications précédentes,
**caractérisé par**
des moyens pour indiquer la fin du mode de validation de la clé.

8. Système de sécurité selon la revendication 7,
**caractérisé en ce que**
les moyens d'indication comprennent l'indication des clés actuellement autorisées pour le système.

9. Système de sécurité selon l'une quelconque des revendications précédentes,
**caractérisé en ce que**
chaque information d'autorisation est un octet de contrôle.

10. Système de sécurité selon l'une quelconque des revendications précédentes,
**caractérisé en ce que**
la mise en service comprend le démarrage du véhicule automobile.

11. Véhicule comprenant un système de sécurité selon l'une ou plusieurs des revendications précédentes.
